# EUROPÄISCHE PATENTSCHRIFT

(11) **EP 4 721 247 B1**
(45) Veröffentlichungstag und Bekanntmachung des Hinweises auf die Patenterteilung: **09.12.2026**
(21) Anmeldenummer: 24721931.4
(22) Anmeldetag: 23.04.2024
(51) Int. Cl.: H02K 3/487, H02K 3/52, H02K 15/00

(54) **NUTVERSCHLUSSEINRICHTUNG FÜR EINE ELEKTRISCHE MASCHINE, VERFAHREN ZUM VERSCHLIESSEN EINER NUT EINER ELEKTRISCHEN MASCHINE, ELEKTRISCHE MASCHINE SOWIE KRAFTFAHRZEUG**
SLOT CLOSURE DEVICE FOR AN ELECTRICAL MACHINE, METHOD FOR CLOSING A SLOT OF AN ELECTRICAL MACHINE, ELECTRICAL MACHINE, AND MOTOR VEHICLE
DISPOSITIF DE FERMETURE DE FENTE POUR UNE MACHINE ÉLECTRIQUE, PROCÉDÉ DE FERMETURE D'UNE FENTE D'UNE MACHINE ÉLECTRIQUE, MACHINE ÉLECTRIQUE ET VÉHICULE AUTOMOBILE

(30) Priorität: 30.05.2023 DE 102023114057
(43) Veröffentlichungstag der Anmeldung: 08.04.2026
(73) Patentinhaber: Bayerische Motoren Werke Aktiengesellschaft, 80809 München (DE)
(72) Erfinder: STREBL, Martin, 80809 München (DE)
(86) Internationale Anmeldenummer: PCT/EP2024/060986
(87) Internationale Veröffentlichungsnummer: WO 2024/245645

(56) Entgegenhaltungen:
- EP-B1- 0 543 280
- DE-A1- 102020 208 957
- DE-A1- 102020 215 746
- US-A- 3 766 417
- US-A- 5 886 446

## Beschreibung

Die vorliegende Erfindung betrifft eine Nutverschlusseinrichtung zum Verschließen einer Nut, die durch zwei in Umfangsrichtung benachbarte Zähne eines Rotors oder Stators einer elektrischen Maschine gebildet ist. Des Weiteren betrifft die Erfindung ein Verfahren zum Verschließen einer solchen Nut. Ferner gehören zu der Erfindung eine elektrische Maschine, deren Rotor und/oder Stator die Nutverschlusseinrichtung aufweist, sowie ein Kraftfahrzeug, das mit einer solchen elektrischen Maschine ausgerüstet ist.

Elektrischen Maschinen weisen einen ortsfesten Stator und einen Rotor auf. Bei fremderregten elektrischen Maschinen trägt der Rotor Rotorpole, die mit jeweils mit Draht bewickelt sind. Zwischen zwei in Umfangsrichtung des Rotors benachbarten Rotorpolen ergibt sich eine Nut bzw. ein radial nach außen hin offener Polzwischenraum. Es besteht der Bedarf, diese Nut bzw. diesen Polzwischenraum zu verschließen, da beim Herstellen der elektrischen Maschine Polzwischenräume mit einer Vergussmasse befüllt werden, um die Drahtwicklungen zu sichern. Dabei soll ein Austreten der Vergussmasse aus den Polzwischenräumen verhindert werden. Hierzu sind aus dem Stand der Technik sogenannte Deckschieber bekannt, die in Axialrichtung des Rotors bzw. Stators der elektrischen Maschine in einen entsprechenden Deckschiebersitz eingeschoben werden. Solche Deckschieber sind zum Beispiel aus der DE 10 2021 122 001 A1 oder DE 10 2017 002 420 A1 bekannt. Problematisch beim Einschieben des herkömmlichen Deckschiebers ist, dass unter dem Einschieben desselben mittels des metallenen Rotor- bzw. Statorblechpakets ein Span vom Deckschieber abgehoben wird. Bliebt der Span unentdeckt, kann er im Betrieb der elektrischen Maschine einen Schaden verursachen, etwa indem der Span von einer Kühl- bzw. Schmiermittelpumpe der elektrischen Maschine angesaugt wird. Somit ist derzeit noch erheblicher Aufwand beim Herstellen einer elektrischen Maschine zu betreiben, um zum einen eine Spanabhebung vom Deckschieber zu vermeiden und zum anderen die elektrische Maschine daraufhin zu untersuchen, ob nicht doch ein unerwünschter Span vom Deckschieber abgehoben wurde.

Weitere Nutverschlusseinrichtungen sind aus der DE 10 2020 208957 A1, US 5 886 446 A, US 3 766 417 A, EP 0 543 280 B1, sowie der DE 10 2020 215746 A1 bekannt.

Aufgabe der vorliegenden Erfindung ist es, ein Herstellen einer elektrischen Maschine zu vereinfachen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Gemäß der Erfindung wird eine Nutverschlusseinrichtung für eine elektrische Maschine vorgeschlagen. Die Nutverschlusseinrichtung wird beim Herstellen der elektrischen Maschine anstelle eines herkömmlichen Deckschiebers dazu eingesetzt, eine durch zwei in Umfangsrichtung benachbarte Zähne eines Rotors oder Stators der elektrischen Maschine gebildete bzw. begrenzte Nut zu verschließen. Zudem schlägt die Erfindung ein Verfahren zum Verschließen einer solchen Nut vor, das insbesondere im Rahmen eines Herstellens der elektrischen Maschine ausgeführt wird. Zur Erfindung gehören des Weiteren eine elektrische Maschine, deren Rotor und/oder Stator die Nutverschlusseinrichtung aufweisen/aufweist, sowie ein Kraftfahrzeug, das die elektrische Maschine aufweist. Bei der elektrischen Maschine handelt es sich insbesondere um eine elektrische Traktions- bzw. Antriebsmaschine, was bedeutet, dass es sich bei dem Kraftfahrzeug insbesondere um ein rein- oder hybridelektrisch antreibbares Kraftfahrzeug handelt.

Die Nutverschlusseinrichtung weist einen Nutverschlusskörper mit zwei seitlichen Flügelanteilen auf. Der Nutverschlusskörper ist ein längliches gerades Bauteil und ist bei Betrachtung seiner Querschnittsfigur zumindest grob T-förmig ausgebildet. Die Nutverschlusseinrichtung weist weiter einen, insbesondere geraden, Schlitz auf, der dem Nutverschlusskörper entlang dessen Längserstreckungsrichtung folgt. Über den Schlitz bzw. über eine Spaltbreite des Schlitzes sind die Flügelanteile (betrachtet in der Querschnittsfigur) voneinander beabstandet. Die Flügelanteile sind aber im Bereich eines Schlitzgrunds bzw. Schlitzbodens des Schlitzes miteinander verbunden. Der Schlitz weist zwei Spannstabsitze auf, nämlich einen am Schlitzgrund angeordneten, ersten Spannstabsitz und einen zweiten Spannstabsitz, der quer zur Längserstreckungsrichtung über dem ersten Spannstabsitz angeordnet ist. Der zweite Spannstabsitz ist dabei kleiner als der erste Spannstabsitz. Der jeweilige Spannstabsitz stellt sich bei Betrachtung der Querschnittsfigur der Nutverschlusseinrichtung bzw. des Nutverschlusskörpers als eine jeweilige Aufweitung des Schlitzes dar. Zur Nutverschlusseinrichtung gehört ferner ein, insbesondere gerader, Spannstab, der im Schlitz - das heißt formschlüssig im ersten oder formschlüssig im zweiten Spannstabsitz - angeordnet ist. Je nachdem, in welchem der Spannstabsitze der Spannstab angeordnet ist, ist die Nutverschlusseinrichtung in eine Montagestellung oder in eine Spanstellung gestellt. Mit anderen Worten ist die Nutverschlusseinrichtung zwischen der Montagestellung und der Spannstellung verstellbar, indem der Spannstab im Schlitz aus dem einen der Spannstabsitze in den anderen der Spannstabsitze bewegt wird. In der Montagestellung - also wenn der Spannstab im ersten, größeren der Spannstabsitze sitzt - sind die Flügelanteile entspannt, und der Schlitz ist entsprechend schmal, woraus eine kleine Spannweite der Flügelanteile resultiert. Sitzt der Spannstab dahingegen im zweiten, kleineren der Spannstabsitze - also in der Spannstellung der Nutverschlusseinrichtung - sind die Flügelanteile durch eine Breite des Spannstabs seitlich auseinandergespannt und der Schlitz ist entsprechend breit; die Spannweite der Flügelanteile ist dementsprechend groß.

Beim Herstellen der elektrischen Maschine wird die Nutverschlusseinrichtung - sofern noch nicht geschehen - in die Montagestellung verstellt und dann in die Nut des Rotors bzw. Stators eingesetzt. Hiernach wird die Nutverschlusseinrichtung aus der Montagestellung in die Spannstellung verstellt, indem der Spannstab im Schlitz aus dem ersten Spannstabsitz radial nach außen in den zweiten Spannstabsitz bewegt wird. Da die Spannweite der Flügelanteile der Nutverschlusseinrichtung in der Montagestellung besonders klein ist, ist ein direktes Abgleiten des Nutverschlusskörpers am Blechpaket des Rotors/Stators nicht erforderlich, sodass ein Abheben eines Materialspans vom Nutverschlusskörper einfach verhindert werden kann. Erst wenn der Nutverschlusskörper bestimmungsgemäß in der entsprechenden Nut zumindest grob positioniert ist, wird die Nutverschlusseinrichtung in deren Spannstellung verstellt. Dabei greifen seitlich außenliegende Flügelspitzen der Flügelanteile in ein korrespondierendes Formschlusselement des Rotors/Stators, sodass ein Formschluss zwischen dem Rotor/Stator und der Nutverschlusseinrichtung gebildet ist. Dadurch wird eine vorteilhaft besonders zuverlässige Dichtungswirkung erreicht, und der Nutverschlusskörper ist besonders sicher in seiner bestimmungsgemäßen Einbaulage gesichert.

Die Herstellung der elektrischen Maschine ist noch weiter vereinfacht, wenn - wie eine mögliche Weiterbildung des Verfahrens vorsieht - die in Montagestellung gestellte Nutverschlusseinrichtung entlang einer Radialrichtung der elektrischen Maschine in die Nut eingesetzt wird. Das bedeutet, dass in diesem Fall auf ein Einschieben des Nutverschlusskörpers in axialer Richtung der elektrischen Maschine (parallel zu einer Rotorwellenlängsmittenachse) verzichtet wird. Dadurch ist die Wahrscheinlichkeit, dass in unerwünschter Weise ein Span vom Nutverschlusskörper abgehoben wird, nahezu vollständig eliminiert. Das rein radiale Einsetzen des Nutverschlusskörpers wird durch die Spannweite der Flügelelemente in der Montagestellung ermöglicht, die kleiner ist als die Spannweite der Flügelelemente in der Spannstellung.

Der Spannstab ist einer möglichen Ausführungsform der Nutverschlusseinrichtung zufolge gemäß einem geraden ovalen Zylinder, insbesondere geradkreiszylindrisch, ausgebildet. So lässt der Spannstab sich besonders einfach aus dem ersten Spannstabsitz in den zweiten Spannstabsitz verschieben. Dank der Abwesenheit von außenumfangsseitigen Längskanten des Spannstabs gleitet dieser besonders einfach am Material des Nutverschlusskörpers innenseitig im Schlitz ab. Daher ist das Verstellen der Nutverschlusseinrichtung in die Spannstellung besonders einfach. Auch das Verstellen der Nutverschlusseinrichtung aus deren Spannstellung in die Montagestellung ist aufgrund der ovalzylindrischen, insbesondere geradkreiszylindrischen Gestalt des Spannstabs vereinfacht. In einer möglichen Alternative ist der Spannstab geradprismatisch ausgebildet. In diesem Fall ist ein besonders zuverlässiger Sitz des Spannstabs im entsprechenden Spannstabsitz gewährleistet. Dadurch kann die Nutverschlusseinrichtung einfacher gehandhabt werden, ohne dass der Spannstab in unerwünschter Weise aus dem entsprechenden Spannstabsitz ausgerückt wird. Zudem kommt der zuverlässige Sitz des Spannstabs im zweiten Spannstabsitz einer vorteilhaft besonders hohen Betriebssicherheit der elektrischen Maschine zugute.

In weiterer möglicher Ausgestaltung ist vorgesehen, dass der Spannstab als ein Hohlstab ausgeführt ist. Dadurch ist der Spannstab besonders leicht, und im Zusammenspiel mit dem Schlitz ist die Nutverschlusseinrichtung - insbesondere verglichen mit herkömmlichen Deckschiebern - leichter ausgebildet. Dies führt zu einem besonders leichten Rotor/Stator und infolgedessen zu einer besonders leichten elektrischen Maschine. Ferner greifen an den Spannstab im Betrieb der elektrischen Maschine aufgrund seiner besonders geringen Masse besonders geringe Kräfte an, wenn der Spannstab im/am Rotor der elektrischen Maschine eingesetzt ist.

Der Spannstab ist gemäß einer weiteren möglichen Ausführungsform aus einem metallischen Material, insbesondere aus einem Leichtmetall wie Magnesium, Aluminium, Titan etc., gebildet. Natürlich kommen Leichtmetalllegierungen ebenso in Frage. Zudem ist zumindest eine alternative Ausführung des Spannstabs denkbar, bei der er aus einem Kunststoff, insbesondere aus einem faserverstärkten Kunststoff, hergestellt ist. Auf diese Weise ist der Spannstab zum einen besonders leicht und zum anderen besonders stabil.

Die Flügelanteile des Nutverschlusskörpers sind in möglicher Weiterbildung der Nutverschlusseinrichtung reversibel elastisch miteinander verbunden, das heißt, die Flügelanteile können zueinander federn. Beispielsweise sind die Flügelanteile stoffschlüssig miteinander verbunden, insbesondere einstückig miteinander ausgebildet. Für die Nutverschlusseinrichtung gilt generell, das heißt ausführungsformunabhängig, dass der Nutverschlusskörper zum Beispiel als ein Kunststoffteil ausgeführt sein kann, das mittels Spritzgießens hergestellt ist. Ferner ist es denkbar, dass der Nutverschlusskörper mittels Extrudierens hergestellt ist. Indem die Flügelanteile stoffschlüssig aneinander befestigt sind, ergibt sich eine weitere Vereinfachung des Herstellens der elektrischen Maschine, da besonders wenige Einzelteile zum Zusammenbauen der elektrischen Maschine zu handhaben sind.

An einer Nuteingriffseite des Nutverschlusskörpers ist in weiterer möglicher Ausgestaltung ein viskoelastischer Materialkörper angeordnet. In bestimmungsgemäßer Einbaulage der Nutverschlusseinrichtung schmiegt sich der viskoelastische Materialkörper besonders innig an äußere von Drahtwicklungen an, mit der entsprechende Rotor- bzw. Statorzahn bewickelt ist. Beispielsweise handelt es sich bei einem Material des viskoelastischen Materialkörpers um ein viskoelastisches Polyurethan. Auf diese Weise werden die Drahtwicklungen mittels des viskoelastischen Materialkörpers positionell gesichert. Dies stellt einen besonderen Vorteil der Nutverschlusseinrichtung dar, da zum positionellen Sichern der Drahtwicklungen dank des viskoelastischen Materialkörpers auf ein Befüllen der Nuten mit einer herkömmlichen Vergussmasse verzichtet werden kann. Dadurch wird der Aufwand, der zum Herstellen der elektrischen Maschine zu betreiben ist, signifikant reduziert. Nicht nur, dass auf das Bauelement Vergussmasse an sich verzichtet werden kann, auch auf einen Energieaufwand, der zum Schmelzen und/oder Aushärten der Vergussmasse einzusetzen war, wird verzichtet. Des Weiteren ist die vergussmassefreie elektrische Maschine besonders leicht, was in ein besonders leicht ausgebildetes Kraftfahrzeug mündet. Dadurch sind den Gedanken an eine besonders umweltschonende Herstellung der elektrischen Maschine und an ein besonders energieeffizient und emissionsarm betreibbares Kraftfahrzeug in besonderem Maße Rechnung getragen.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Querschnittsfigur einer Nutverschlusseinrichtung, die in einer Montagestellung angeordnet ist,
- Fig. 2: eine Querschnittsfigur der Nutverschlusseinrichtung, die in einer Spannstellung angeordnet ist, und
- Fig. 3: zur Verdeutlichung eines Verfahrens zum Verschließen einer Nut mittels der Nutverschlusseinrichtung in jeweils schematischer Ansicht:
Fig. 3a ein Einsetzen der Nutverschlusseinrichtung in die Nut,
Fig. 3b die in die Nut grob positionierte Nutverschlusseinrichtung in der Montagestellung und
Fig. 3c die die Nut verschließende Nutverschlusseinrichtung in deren Spannstellung.

In den Figuren sind gleiche und funktionsgleiche Elemente mit gleichem Bezugszeichen versehen.

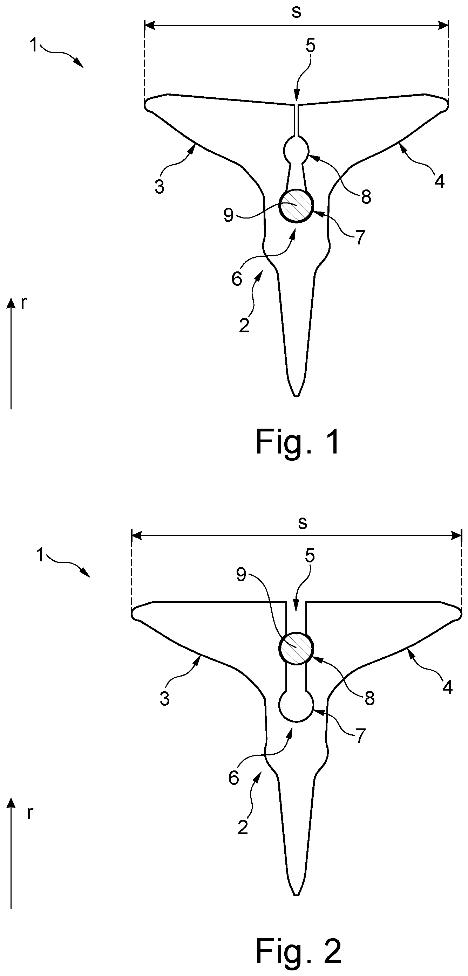

Fig. 1 und Fig. 2 zeigt jeweils eine Querschnittsfigur einer Nutverschlusseinrichtung 1, durch welche ein Bauteil einer elektrischen Maschine 10 gebildet ist. Bei der elektrischen Maschine 10 handelt es sich im vorliegenden Beispiel um eine elektrische Traktionsmaschine für ein reinelektrisch oder hybridelektrisch antreibbares Kraftfahrzeug (nicht dargestellt). Die längliche Nutverschlusseinrichtung 1 weist - wie in Fig 1 zu erkennen ist - einen im Wesentlichen T-förmigen Nutverschlusskörper 2 auf, welcher zwei seitliche Flügelanteile 3, 4 aufweist. Weiter weist die Nutverschlusseinrichtung 1 einen Schlitz 5 auf, an dessen Schlitzgrund 6 die Flügelanteile 3, 4 stoffschlüssig miteinander verbunden sind. Der Schlitz 5 weist zwei Spannstabsitze 7, 8 auf, von denen ein erster Spannstabsitz 7 im Bereich des Schlitzgrunds 6 einen Teil des Schlitzes 5 bildet. Der zweite Spannstabsitz 8 ist oberhalb des ersten Spannstabsitzes 7 angeordnet, das heißt in Bezug auf eine Radialrichtung r der Nutverschlusseinrichtung 1 bzw. der elektrischen Maschine 10 radial weiter außen als der erste Spannstabsitz 7. Durch den zweiten Spannstabsitz 8 ist ebenfalls ein Teil des Schlitzes 5 gebildet. Der am Schlitzgrund 6 angeordnete, erste Spannstabsitz 7 ist größer als der oberhalb angeordnete, zweite Spannstabsitz 8. Die Nutverschlusseinrichtung 1 ist zwischen einer Montagestellung und einer Spannstellung verstellbar, wofür sie einen Spannstab 9 umfasst, der im Schlitz 5 angeordnet ist. Der Spannstab 9 kann als gerades Prisma oder - wie vorliegend dargestellt - als ein gerader Kreiszylinder ausgebildet sein. Obwohl in den Figuren nicht dargestellt, kann der Spannstab 9 als ein Hohlstab ausgebildet sein. Vorliegend ist der Spannstab 9 aus Aluminium ausgebildet. Andere Materialien sind aber genauso gut denkbar, zum Beispiel ein anderes Metall, insbesondere Leichtmetall, ein Kunststoff etc.

Je nachdem, in welchem der Spannstabsitze 7, 8 der Spannstab 9 angeordnet ist, ist die Nutverschlusseinrichtung 1 in die Montagestellung (siehe Fig, 1) oder in die Spanstellung (siehe Fig. 2) gestellt. In der Montagestellung - also wenn der Spannstab 9 im ersten, größeren Spannstabsitz 7 sitzt - sind die Flügelanteile 3, 4 entspannt, und der Schlitz 5 ist entsprechend schmal, woraus eine kleine Spannweite s der Flügelanteile 3, 4 resultiert. Sitzt der Spannstab 9 dahingegen im zweiten, kleineren Spannstabsitz 8 - also in der Spannstellung der Nutverschlusseinrichtung 1 - sind die Flügelanteile 3, 4 durch eine Breite des Spannstabs 9 seitlich auseinandergespannt und der Schlitz 5 ist entsprechend breit; die Spannweite s der Flügelanteile 3, 4 ist dann dementsprechend groß, also größer als in der Montagestellung der Nutverschlusseinrichtung 1. Demnach ist die Nutverschlusseinrichtung 1 ausgehend von deren Montagestellung (Fig. 1) in die Spannstellung (Fig. 2) verstellbar, indem der Spannstab 9 im Schlitz 5 aus dem ersten Spannstabsitz 7 in den zweiten Spannstabsitz 8 bewegt wird. Umgekehrt ist die die Nutverschlusseinrichtung 1 ausgehend von deren Spannstellung (Fig. 2) in die Montagestellung (Fig. 1) verstellbar, indem der Spannstab 9 im Schlitz 5 aus dem zweiten Spannstabsitz 8 in den ersten Spannstabsitz 7 bewegt wird.

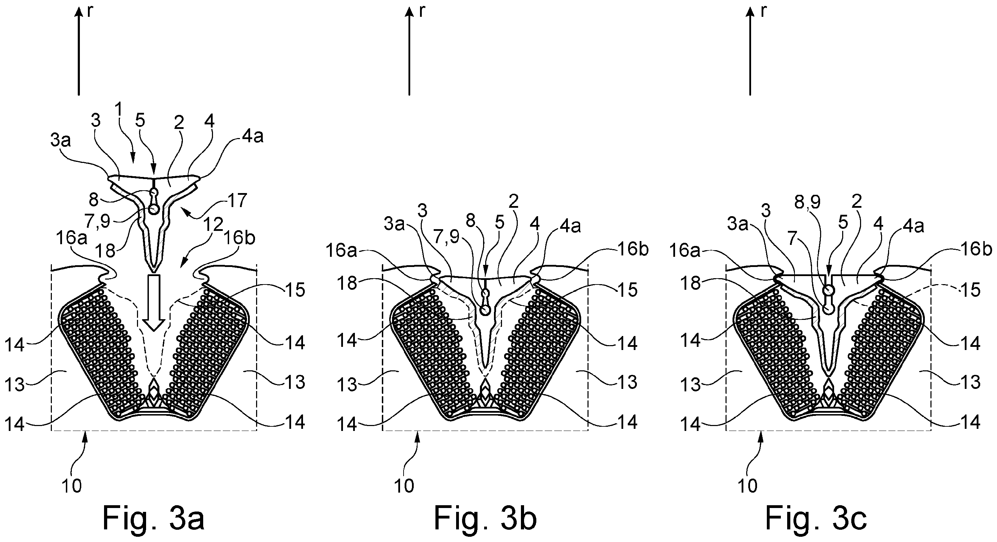

Mithilfe der Fig. 3a, 3b, 3c wird am Beispiel eines Rotors 11 der elektrischen Maschine 10 ein Verfahren zum Verschließen einer Nut 12 der elektrischen Maschine 10 dargelegt. Eine solche Nut 12 ist durch zwei in Umfangsrichtung benachbarte Rotorzähne 13 bzw. Rotorpole des Rotors 11 der elektrischen Maschine 10 gebildet bzw. begrenzt. Der jeweilige Rotorzahn ist mit einer Vielzahl von Drahtwicklungen 14 umwickelt, von denen aus Übersichtlichkeitsgründen nicht alle gezeichnet sind und nur einige wenige davon mit dem entsprechenden Bezugszeichen versehen sind. In Fig. 3a und 3b ist in diesem Zusammenhang eine strichliert eingezeichnete Linie zu erkennen, die eine Anordnung von außenliegenden der Drahtwicklungen 14 charakterisiert.

Bei dem Verfahren wird, sofern noch nicht geschehen, die Nutverschlusseinrichtung 1 in die Montagestellung verstellt. Hiernach wird die Nutverschlusseinrichtung 1 in die Nut 12 des Rotors 11 eingesetzt. Im vorliegenden Beispiel ist vorgesehen, dass ein axiales Ein-oder Aufschieben des Nutverschlusskörpers 2 in/auf den Rotor 11 völlig unterbleibt. Stattdessen wird der Nutverschlusskörper 2 in ausschließlich radialer Richtung bzw. ausschließlich entlang Radialrichtung r in die Nut 12 eingesetzt. Dies ist in Fig. 3a dargestellt. Fig. 3b zeigt, wie die Nutverschlusseinrichtung 1 in die Nut 12 eingesetzt ist, wobei Flügelspitzen 3a, 4a der Flügelanteile 3, 4 und entsprechende Formschlusselemente 16a, 16b des Rotors 11 grob zueinander ausgerichtet sind. Danach wird die Nutverschlusseinrichtung 1 aus der Montagestellung in die Spannstellung verstellt, indem der Spannstab 9 im Schlitz 5 aus dem ersten Spannstabsitz 7 radial nach außen in den zweiten Spannstabsitz 8 bewegt wird. Dadurch werden die Flügelanteile 3, 4 (die auch als Flanken bezeichnet werden können) nach außen gedrängt und bilden einen Form- und Kraftschluss mit dem Blechpaket des Rotors 11. Es ist in Fig. 3c zu erkennen, wie die seitlich außenliegende Flügelspitzen 3a, 4a der Flügelanteile 3, 4 in das jeweils korrespondierende Formschlusselement 16a bzw. 16b des Rotors 11 eingreifen, sodass ein Formschluss zwischen dem Rotor 11 und der Nutverschlusseinrichtung 1 gebildet ist.

An einer Nuteingriffseite 17 des Nutverschlusskörpers 2 ist gemäß dem vorliegenden Beispiel ein optionaler viskoelastischer Materialkörper 18 angeordnet. Dieser ist in Fig. 3a, 3b und 3c dargestellt und schmiegt sich - siehe Fig. 3c - besonders innig an die Wicklungskontur 15, also an die außenliegenden der Drahtwicklungen 14, an. Beispielsweise ist für ein Material des viskoelastischen Materialkörpers 18 viskoelastisches Polyurethan vorgesehen. Die Drahtwicklungen 14 werden mittels des Materialkörpers 18 positionell gegen ein unerwünschtes Verrutschen gesichert. Dank des viskoelastischen Materialkörpers 18 kann auf ein Befüllen der Nuten 12 der elektrischen Maschine 10 mit einer herkömmlichen Vergussmasse verzichtet werden.

Durch die Nutverschlusseinrichtung 1 und durch das Verfahren zum Verschließen der Nut 12 mittels der Nutverschlusseinrichtung 1 ist ein jeweiliges Mittel aufgezeigt, wie ein Herstellen einer elektrischen Maschine zu vereinfachen ist. Die daraus resultierenden Vorteile führen zur besonders vorteilhaft ausgebildeten elektrischen Maschine 10 sowie zum besonders vorteilhaften Kraftfahrzeug.

### Bezugszeichenliste

- 1: Nutverschlusseinrichtung
- 2: Nutverschlusskörper
- 3: Flügelanteil
- 3a: Flügelspitze
- 4: Flügelanteil
- 4a: Flügelspitze
- 5: Schlitz
- 6: Schlitzgrund
- 7: erster Spannstabsitz
- 8: zweiter Spannstabsitz
- 9: Spannstab
- 10: elektrische Maschine
- 11: Rotor
- 12: Nut
- 13: Rotorzahn (Rotorpol)
- 14: Drahtwicklung
- 15: Wicklungskontur
- 16a: Formschlusselement
- 16b: Formschlusselement
- 17: Nuteingriffseite
- 18: viskoelastischer Materialkörper

- r: Radialrichtung
- s: Spannweite

## Patentansprüche

1. Nutverschlusseinrichtung (1) für eine elektrische Maschine (10), wobei die Nutverschlusseinrichtung (1) aufweist:
- einen Nutverschlusskörper (2) mit zwei seitlichen Flügelanteilen (3, 4),
- einen sich in Längserstreckungsrichtung des Nutverschlusskörpers (2) erstreckenden, insbesondere geraden, Schlitz (5), an dessen Schlitzgrund (6) die Flügelanteile (3, 4) miteinander verbunden sind,
**dadurch gekennzeichnet, dass** der Schlitz (5) aufweist:
- einen am Schlitzgrund (6) angeordneten, ersten Spannstabsitz (7) und
- einen zweiten Spannstabsitz (8), der kleiner als der erste Spannstabsitz (7) ist und senkrecht zur Längserstreckungsrichtung über dem ersten Spannstabsitz (7) angeordnet ist,
- einen Spannstab (9), der entlang der Längserstreckungsrichtung im Schlitz (5) angeordnet ist,
wobei die Nutverschlusseinrichtung (1) durch Bewegen des Spannstabs (9) im Schlitz (5) aus dem einen der Spannstabsitze (7, 8) in den anderen der Spannstabsitze (7, 8) zwischen
- einer Montagestellung, in welcher die Flügelanteile (3, 4) aufgrund des formschlüssig im ersten Spannstabsitz (7) sitzenden Spannstabs (9) entspannt sind,
- und einer Spannstellung, in welcher die Flügelanteile (3, 4) mittels des formschlüssig im zweiten Spannstabsitz (8) sitzenden Spannstabs (9) seitlich auseinandergespannt sind,
verstellbar ist, wobei eine Spannweite (s) der Flügelanteile (3, 4) in der Montagestellung kleiner als in der Spannstellung ist.

2. Nutverschlusseinrichtung (1) nach Anspruch 1,
**dadurch gekennzeichnet, dass**
der Spannstab (9) gerade, insbesondere gemäß einem geraden Kreiszylinder oder gemäß einem geraden Prisma, ausgebildet ist.

3. Nutverschlusseinrichtung (1) nach Anspruch 1 oder 2,
**dadurch gekennzeichnet, dass**
der Spannstab (9) als ein Hohlstab ausgeführt ist.

4. Nutverschlusseinrichtung (1) nach einem der vorhergehenden Ansprüche,
**dadurch gekennzeichnet, dass**
der Spannstab (9) aus einem metallischen Material, insbesondere aus einem Leichtmetall, gebildet ist.

5. Nutverschlusseinrichtung (1) nach einem der vorhergehenden Ansprüche,
**dadurch gekennzeichnet, dass**
die Flügelanteile (3, 4) am Schlitzgrund (6) stoffschlüssig miteinander verbunden sind.

6. Nutverschlusseinrichtung (1) nach einem der vorhergehenden Ansprüche,
**dadurch gekennzeichnet, dass**
an einer Nuteingriffseite (17) des Nutverschlusskörpers (2) ein viskoelastischer Materialkörper (18) angeordnet ist.

7. Verfahren zum Verschließen einer Nut (12), die durch zwei in Umfangsrichtung benachbarte Zähne (13) eines Rotors oder Stators einer elektrischen Maschine (10) gebildet ist, mittels einer nach einem der Ansprüche 1 bis 6 ausgeführten Nutverschlusseinrichtung (1), wobei
- die Nutverschlusseinrichtung (1) in Montagestellung in die Nut (12) eingesetzt wird,
- die Nutverschlusseinrichtung (1) aus der Montagestellung in die Spannstellung verstellt wird, indem der Spannstab (9) im Schlitz (5) aus dem ersten Spannstabsitz (7) entlang einer Radialrichtung (r) radial nach außen in den zweiten Spannstabsitz (8) bewegt wird.

8. Verfahren nach Anspruch 7,
**dadurch gekennzeichnet, dass**
die in Montagestellung gestellte Nutverschlusseinrichtung (1) entlang der Radialrichtung (r) der elektrischen Maschine in die Nut (12) eingesetzt wird.

9. Elektrische Maschine (10), deren Rotor (11) und/oder Stator eine nach einem der Ansprüche 1 bis 6 ausgebildete Nutverschlusseinrichtung (1) aufweisen/aufweist.

10. Kraftfahrzeug mit einer nach Anspruch 9 ausgeführten elektrischen Maschine (10).

## Claims

1. Slot closure device (1) for an electrical machine (10), wherein the slot closure device (1) has:
- a slot closure body (2) having two lateral wing parts (3, 4),
- a slit (5), in particular a straight slit, which extends in the longitudinal direction of the slot closure body (2) and at the slit bottom (6) of which the wing parts (3, 4) are connected to one another,
**characterized in that** the slit (5) has:
- a first bracing bar seat (7), which is arranged on the slit bottom (6), and
- a second bracing bar seat (8), which is smaller than the first bracing bar seat (7) and is arranged over the first bracing bar seat (7) perpendicularly to the longitudinal direction,
- a bracing bar (9), which is arranged in the slit (5) along the longitudinal direction,
wherein the slot closure device (1) is movable, by moving the bracing bar (9) within the slit (5) out of one of the bracing bar seats (7, 8) into the other bracing bar seat (7, 8), between
- a mounting position, in which the wing parts (3, 4) are relaxed owing to the bracing bar (9) sitting form-fittingly in the first bracing bar seat (7),
- and a bracing position, in which the wing parts (3, 4) are laterally braced apart by means of the bracing bar (9) sitting form-fittingly in the second bracing bar seat (8),
wherein a bracing width (s) of the wing parts (3, 4) is smaller in the mounting position than in the bracing position.

2. Slot closure device (1) according to Claim 1, **characterized in that**
the bracing bar (9) is straight, in particular designed as a straight circular cylinder or as a straight prism

3. Slot closure device (1) according to Claim 1 or 2, **characterized in that**
the bracing bar (9) is designed as a hollow bar.

4. Slot closure device (1) according to one of the preceding claims,
**characterized in that**
the bracing bar (9) is formed from a metallic material, in particular from a light metal.

5. Slot closure device (1) according to one of the preceding claims,
**characterized in that**
the wing parts (3, 4) are integrally joined to one another at the slit bottom (6).

6. Slot closure device (1) according to one of the preceding claims,
**characterized in that**
a viscoelastic material body (18) is arranged on a slot engagement side (17) of the slot closure body (2).

7. Method for closing a slot (12) that is formed by two teeth (13) of a rotor or stator of an electrical machine (10), said teeth being adjacent in the circumferential direction, by means of a slot closure device (1) designed according to one of Claims 1 to 6, wherein
- the slot closure device (1) is inserted into the slot (12) in the mounting position,
- the slot closure device (1) is moved out of the mounting position into the bracing position by moving the bracing bar (9) within the slit (5) radially outward in a radial direction (r) out of the first bracing bar seat (7) into the second bracing bar seat (8).

8. Method according to Claim 7,
**characterized in that**
the slot closure device (1) in the mounting position is inserted into the slot (12) in the radial direction (r) of the electrical machine.

9. Electrical machine (10), the rotor (11) and/or stator of which have/has a slot closure device (1) designed according to one of Claims 1 to 6.

10. A motor vehicle having an electrical machine (10) designed according to Claim 9.

## Revendications

1. Dispositif de fermeture de rainure (1) pour une machine électrique (10), le dispositif de fermeture de rainure (1) comprenant :
- un corps de fermeture de rainure (2) comportant deux parties latérales en forme d'aile (3, 4),
- une fente (5), notamment rectiligne, s'étendant dans la direction d'extension longitudinale du corps de fermeture de rainure (2), les parties latérales en forme d'aile (3, 4) étant reliées entre elles au fond (6) de la fente,
**caractérisé en ce que** la fente (5) présente :
- un premier siège de tige de serrage (7) disposé au fond (6) de la fente, et
- un second siège de tige de serrage (8), plus petit que le premier siège de tige de serrage (7) et disposé au-dessus du premier siège de tige de serrage (7), perpendiculairement à la direction d'extension longitudinale,
- une tige de serrage (9) disposée dans la fente (5) selon la direction d'extension longitudinale,
le dispositif de fermeture de rainure (1) pouvant, par déplacement de la tige de serrage (9) dans la fente (5) de l'un des sièges de tige de serrage (7, 8) vers l'autre des sièges de tige de serrage (7, 8), être réglé entre
- une position de montage dans laquelle les parties latérales en forme d'aile (3, 4) sont détendues, la tige de serrage (9) étant logée par complémentarité de forme dans le premier siège de tige de serrage (7),
- et une position de serrage dans laquelle les parties latérales en forme d'aile (3, 4) sont écartées latéralement par la tige de serrage (9) logée par complémentarité de forme dans le second siège de tige de serrage (8),
une largeur (s) entre les parties latérales en forme d'aile (3, 4) étant plus petite dans la position de montage que dans la position de serrage.

2. Dispositif de fermeture de rainure (1) selon la revendication 1,
**caractérisé en ce que**
la tige de serrage (9) est rectiligne, notamment en forme de cylindre circulaire droit ou de prisme droit.

3. Dispositif de fermeture de rainure (1) selon la revendication 1 ou 2,
**caractérisé en ce que**
la tige de serrage (9) est réalisée sous la forme d'une tige creuse.

4. Dispositif de fermeture de rainure (1) selon l'une des revendications précédentes,
**caractérisé en ce que**
la tige de serrage (9) est constituée d'un matériau métallique, notamment d'un métal léger.

5. Dispositif de fermeture de rainure (1) selon l'une des revendications précédentes,
**caractérisé en ce que**
les parties latérales en forme d'aile (3, 4) sont reliées entre elles par liaison de matière au fond (6) de la fente.

6. Dispositif de fermeture de rainure (1) selon l'une des revendications précédentes,
**caractérisé en ce que**
un corps en matériau viscoélastique (18) est disposé sur un côté d'engagement dans la rainure (17) du corps de fermeture de rainure (2).

7. Procédé de fermeture d'une rainure (12) formée par deux dents (13) adjacentes dans la direction circonférentielle d'un rotor ou d'un stator d'une machine électrique (10), au moyen d'un dispositif de fermeture de rainure (1) selon l'une des revendications 1 à 6, dans lequel
- le dispositif de fermeture de rainure (1) est inséré dans la rainure (12) en position de montage,
- le dispositif de fermeture de rainure (1) est réglé de la position de montage à la position de serrage par déplacement de la tige de serrage (9) dans la fente (5), du premier siège de tige de serrage (7) vers le second siège de tige de serrage (8), radialement vers l'extérieur selon une direction radiale (r).

8. Procédé selon la revendication 7,
**caractérisé en ce que**
le dispositif de fermeture de rainure (1), placé en position de montage, est inséré dans la rainure (12) selon la direction radiale (r) de la machine électrique.

9. Machine électrique (10), dont le rotor (11) et/ou le stator comprend/comprennent un dispositif de fermeture de rainure (1) selon l'une des revendications 1 à 6.

10. Véhicule automobile comprenant une machine électrique (10) selon la revendication 9.
